# FASCICULE DE BREVET EUROPEEN

(11) **EP 3 825 177 B1**
(45) Date de publication et mention de la délivrance du brevet: **14.09.2022**
(21) Numéro de dépôt: 20207299.7
(22) Date de dépôt: 12.11.2020
(51) Int. Cl.: B60N 2/897, B60N 2/894, B60N 2/809

(54) **SYSTÈME DE MONTAGE D'UN APPUI-TÊTE DE VÉHICULE AUTOMOBILE SUR UN DOSSIER DE SIÈGE**
SYSTEM ZUR MONTAGE EINER KOPFSTÜTZE AN EINER RÜCKENLEHNE EINES KRAFTFAHRZEUGSITZES
SYSTEM FOR INSTALLING A HEADREST ON A BACKREST OF A MOTOR VEHICLE SEAT

(30) Priorité: 19.11.2019 FR 1912880
(43) Date de publication de la demande: 26.05.2021
(73) Titulaire: TESCA France, 75008 Paris (FR)
(72) Inventeur: BONTE, Emmanuel, 75008 Paris (FR); HORNY, Frédéric, 75008 Paris (FR); DELUS, Christian, 75008 Paris (FR); DAUCHEZ, Fernand, 75008 Paris (FR)
(74) Mandataire: Sayettat, Julien Christian

(56) Documents cités:
- FR-A1- 2 029 553
- US-A- 5 992 939

## Description

L'invention concerne un système de montage d'un appui-tête de véhicule automobile sur un dossier de siège, un dossier et un appui-tête comprenant une gaine d'un tel système, et aussi une gaine d'un tel système. Le document US 5 992 939 A montre un exemple de l'art antérieur d'un système de montage d'un appui-tête de véhicule automobile sur un dossier de siège.

Il est connu de réaliser un système de montage d'un appui-tête de véhicule automobile sur un dossier de siège, ledit système comprenant :
- une tige métallique,
- une gaine en matériau plastique moulé de réception en coulissement de ladite tige, ladite gaine présentant un conduit dont la face interne présente au moins une zone étendue définissant une face d'appui s'ajustant en contact serrant par complémentarité de formes avec ladite tige, de sorte que ladite tige coulisse en contact ajusté dans ledit conduit.

Avec un tel agencement, on peut observer, quand la tige présente une surface très lisse, par exemple quand elle comporte une fine couche d'aspect à base de chrome, un phénomène d'inhibition du coulissement de ladite tige dans la gaine, ceci du fait de l'apparition d'un phénomène de dépression au sein de la microcouche d'air présente entre ladite tige et la face d'appui.

Pour pallier cet inconvénient, il est connu d'interposer un agent lubrifiant entre la tige et la face d'appui.

Une telle façon de procéder présente toutefois divers inconvénients :
- un surcoût lié à l'utilisation de ce lubrifiant,
- des difficultés à maîtriser la quantité de lubrifiant déposée,
- un risque de salissures que peut provoquer ce lubrifiant,
- enfin, en cas de coulissement répété, le lubrifiant est progressivement expulsé de la face d'appui, ce qui entraîne une augmentation de l'effort de coulissement.

L'invention a pour but de pallier ces inconvénients.

A cet effet, l'invention propose un système de montage d'un appui-tête de véhicule automobile sur un dossier de siège, ledit système comprenant :
- une tige métallique,
- une gaine en matériau plastique moulé de réception en coulissement de ladite tige, ladite gaine présentant un conduit dont la face interne présente au moins une zone étendue définissant une face d'appui s'ajustant en contact serrant par complémentarité de formes avec ladite tige, de sorte que ladite tige coulisse en contact ajusté dans ledit conduit,
ladite face d'appui étant grainée.

On précise ici que, dans cette description, les termes de positionnement dans l'espace (haut, longitudinal, latéral, avant, ...) sont pris en référence au système disposé dans le véhicule.

Le fait que la face d'appui soit grainée est à considérer selon l'acception bien connue des spécialistes en moulage de matériaux plastiques, à savoir que ladite face est rendue rugueuse de par un aspect rugueux conféré à la paroi interne du moule utilisé pour l'obtenir.

De par la présence de ce grainage, la face d'appui s'appuie sur la tige par une multitude de zones sensiblement ponctuelles, correspondant aux sommets des grains, ce qui permet de limiter fortement le risque de blocage du coulissement de la tige lié à des phénomènes de dépression (« effet ventouse ») pouvant se produire entre ladite tige et ladite face d'appui.

Selon d'autres aspects, l'invention propose un dossier et un appui-tête comprenant une gaine d'un tel système, et aussi une gaine d'un tel système.

D'autres particularités et avantages de l'invention apparaîtront dans la description qui suit, faite en référence aux figures jointes, dans lesquelles :
[Fig.1] est une vue schématique en perspective d'un système selon une première réalisation,
[Fig.2] est une vue de détail écorchée de la figure 1,
[Fig.3] est une vue schématique en perspective du système de la figure 1 intégré dans son environnement,
[Fig.4] est analogue à la figure 3 en vue éclatée,
[Fig.5] est une vue schématique en perspective d'une face d'appui selon un mode de réalisation,
[Fig.6] est une vue schématique en perspective écorchée d'un système selon une deuxième réalisation, ledit système étant intégré dans son environnement.

En référence aux figures, on décrit un système 1 de montage d'un appui-tête 2 de véhicule automobile sur un dossier 3 de siège selon une première réalisation, ledit système comprenant :
- une tige 4 - notamment tubulaire et présentant notamment une section circulaire ou ovale selon la réalisation représentée - métallique,
- une gaine 5 en matériau plastique moulé de réception en coulissement de ladite tige, ladite gaine présentant un conduit 6 dont la face interne 7 présente au moins une zone étendue définissant une face d'appui 8 s'ajustant en contact serrant par complémentarité de formes avec ladite tige, de sorte que ladite tige coulisse en contact ajusté dans ledit conduit,
ladite face d'appui étant grainée.

De façon non représentée, le système 1 peut comprendre en outre un dispositif de verrouillage de la tige 4 par rapport à la gaine 5 selon une pluralité de positions de réglage, de manière à permettre un réglage en hauteur de l'appui-tête 2.

De façon non représentée, le dispositif de verrouillage peut comprendre :
- au moins une tige 4 pourvue de crans de réglage s'étageant axialement - c'est à dire selon l'axe d'extension de ladite tige -,
- au moins une saillie de verrouillage, montée mobile par rapport à la gaine 5, de réception de ladite tige entre une position de verrouillage, où ladite saillie s'insère dans un desdits crans, et une position de déverrouillage, où ladite saillie se retire dudit cran afin de libérer le coulissement de ladite tige.

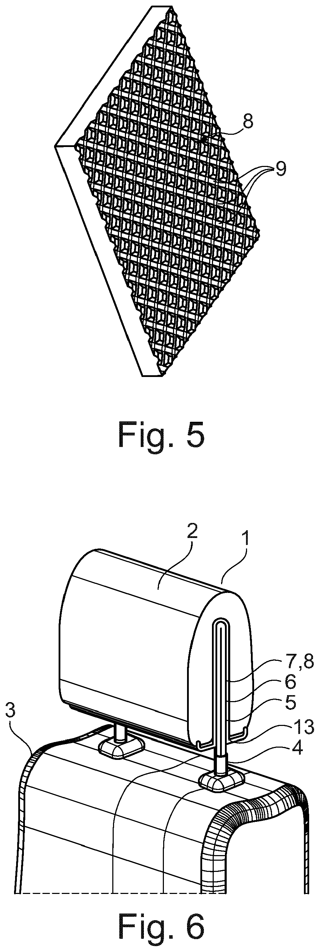

Selon le mode de réalisation de la figure 5, le grainage définit entre la tige 4 et la face d'appui 8 un réseau de pores 9 communiquant, de manière à garantir l'absence de zones présentant un risque d'apparition de dépression d'air.

Selon un mode de réalisation, la tige 4 présente un traitement externe de surface.

Selon divers modes de réalisation, le traitement de surface est réalisé par :
- un dépôt métallique, par exemple à base de chrome,
- et/ou une peinture,
- et/ou un vernis.

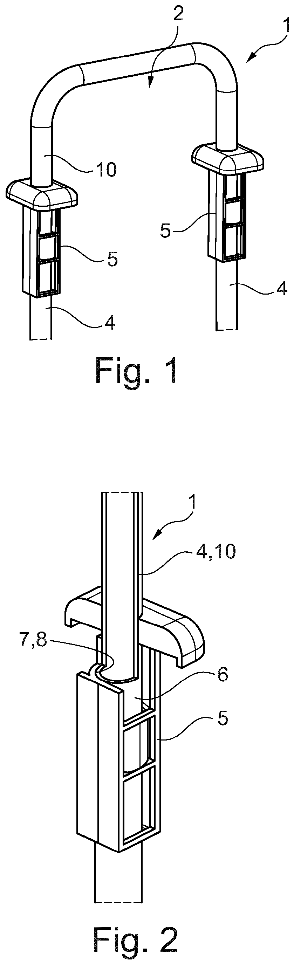

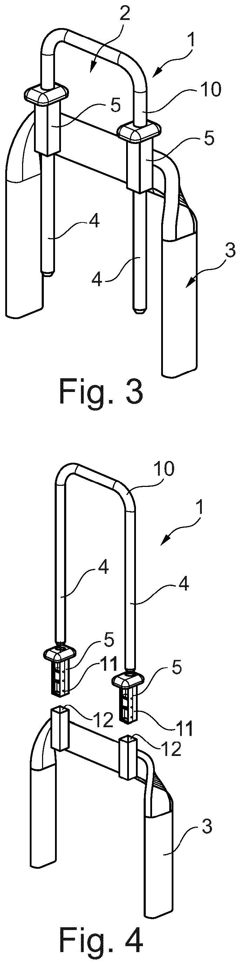

Selon la première réalisation des figures 1 à 4, le système 1 comprend deux gaines 5 de réception de deux tiges 4 respectives, sachant que :
- lesdites gaines comprennent des moyens de montage 11 - formés ici par la paroi externe desdites gaines en vue d'un emboitement - destinés à coopérer avec des moyens réciproques 12 - ici sous forme de tubes de réception desdites gaines en emboitement -, prévus en haut de dossier 3,
- lesdites tiges sont issues d'une armature 10 tubulaire métallique repliée de manière à présenter en vue de face - c'est à dire en vue longitudinale - une forme générale en U renversé, chacune des branches du U définissant une desdites tiges coulissant chacune dans une desdites gaines, le haut de ladite armature étant destiné à être pourvu d'un coussin d'appui, non représenté, pour former un appui-tête 2.

Selon un mode de réalisation non représenté, le U renversé peut être replié dans sa partie haute de sensiblement un demi-tour vers l'avant, de sorte que l'armature 10 présente un vue latérale une forme générale de J renversé.

On décrit à présent, en référence à la première réalisation, un dossier 3 de siège de véhicule automobile sur lequel sont montées en partie haute deux gaines 5 d'un tel système 1.

Selon la deuxième réalisation, représentée en figure 6, le système 1 comprend deux gaines 5 de réception de deux tiges 4 respectives, sachant que :
- lesdites gaines sont :
   ∘ soit pourvues de moyens de montage - par exemple par emboitement - destinés à coopérer avec des moyens réciproques prévus dans un boitier d'absorption d'énergie 13 - en cas de choc de la tête d'un passager sur l'appui-tête 2 - en matériau plastique moulé destiné à être pourvu d'un coussin d'appui-tête,
   ∘ soit moulées d'un bloc avec une structure intermédiaire pour former un tel boitier,
- lesdites tiges sont issues d'une armature métallique de dossier 3, étant par exemple soudées sur ladite armature.

On décrit alors, pour cette deuxième réalisation, un appui-tête 2 de siège de véhicule automobile comprenant un boitier d'absorption d'énergie 13, ledit boitier intégrant deux gaines 5 d'un tel système, lesdites gaines étant :
- soit montées dans ledit boitier,
- soit moulées d'un bloc avec une structure intermédiaire pour former ledit boitier.

On décrit enfin une gaine 5 d'un tel système 1, ladite gaine étant en matériau plastique moulé, ladite gaine présentant un conduit 6 dont la face interne 7 présente au moins une zone étendue définissant une face d'appui 8, ladite face d'appui étant grainée.

## Revendications

1. Système (1) de montage d'un appui-tête (2) de véhicule automobile sur un dossier (3) de siège, ledit système comprenant :
• une tige (4) métallique,
• une gaine (5) en matériau plastique moulé de réception en coulissement de ladite tige, ladite gaine présentant un conduit (6) dont la face interne (7) présente au moins une zone étendue définissant une face d'appui (8) s'ajustant en contact serrant par complémentarité de formes avec ladite tige, de sorte que ladite tige coulisse en contact ajusté dans ledit conduit,
ledit système étant **caractérisé en ce que** ladite face d'appui est grainée.

2. Système selon la revendication 1, **caractérisé en ce qu'**il comprend en outre un dispositif de verrouillage de la tige (4) par rapport à la gaine (5) selon une pluralité de positions de réglage, de manière à permettre un réglage en hauteur de l'appui-tête (2).

3. Système selon l'une des revendications 1 ou 2, **caractérisé en ce que** le grainage définit entre la tige (4) et la face d'appui (8) un réseau de pores (9) communiquant.

4. Système selon l'une quelconque des revendications 1 à 3, **caractérisé en ce que** la tige (4) présente un traitement externe de surface.

5. Système selon la revendication 4, **caractérisé en ce que** le traitement de surface est réalisé par :
• un dépôt métallique,
• et/ou une peinture,
• et/ou un vernis.

6. Système selon l'une quelconque des revendications 1 à 5, **caractérisé en ce qu'**il comprend deux gaines (5) de réception de deux tiges (4) respectives, sachant que :
• lesdites gaines comprennent des moyens de montage destinés à coopérer avec des moyens réciproques prévus en haut de dossier (3),
• lesdites tiges sont issues d'une armature (10) tubulaire métallique repliée de manière à présenter en vue de face une forme générale en U renversé, chacune des branches du U définissant une desdites tiges coulissant chacune dans une desdites gaines, le haut de ladite armature étant destiné à être pourvu d'un coussin d'appui pour former un appui-tête (2).

7. Système selon l'une quelconque des revendications 1 à 5, **caractérisé en ce qu'**il comprend deux gaines (5) de réception de deux tiges (4) respectives, sachant que :
• lesdites gaines sont :
∘ soit pourvues de moyens de montage destinés à coopérer avec des moyens réciproques prévus dans un boitier d'absorption d'énergie (13) en matériau plastique moulé destiné à être pourvu d'un coussin d'appui-tête,
∘ soit moulées d'un bloc avec une structure intermédiaire pour former un tel boitier,
• lesdites tiges sont issues d'une armature (10) métallique de dossier (3).

8. Dossier (3) de siège véhicule automobile sur lequel sont montées en partie haute deux gaines (5) d'un système selon la revendication 6.

9. Appui-tête (2) de siège de véhicule automobile comprenant un boitier d'absorption d'énergie (13), ledit boitier intégrant deux gaines (5) d'un système selon la revendication 7, lesdites gaines étant :
• soit montées dans ledit boitier,
• soit moulées d'un bloc avec une structure intermédiaire pour former ledit boitier.

10. Gaine (5) d'un système (1) selon l'une quelconque des revendications 1 à 7, ladite gaine étant en matériau plastique moulé, ladite gaine présentant un conduit (6) dont la face interne (7) présente au moins une zone étendue définissant une face d'appui (8), ladite gaine étant **caractérisée en ce que** ladite face d'appui est grainée.

## Patentansprüche

1. System (1) zur Montage einer Kopfstütze (2) eines Kraftfahrzeuges auf einer Rückenlehne (3) eines Sitzes, wobei das System umfasst:
- eine Metallstange (4),
- eine Hülle (5) aus einem geformten Kunststoffmaterial zur gleitenden Aufnahme der Stange, wobei die Hülle eine Leitung (6) aufweist, deren Innenfläche (7) mindestens eine weitläufige Zone aufweist, die eine Anlegefläche (8) definiert, die sich durch Formschlüssigkeit in Anpresskontakt mit der Stange anpasst, sodass die Stange in angepasstem Kontakt in der Leitung gleitet,
wobei das System **dadurch gekennzeichnet ist, dass** die Anlegefläche gekörnt ist.

2. System nach Anspruch 1, **dadurch gekennzeichnet, dass** es weiter eine Verriegelungsvorrichtung der Stange (4) in Bezug auf die Hülle (5) entsprechend einer Vielzahl von Einstellpositionen umfasst, um eine Höheneinstellung der Kopfstütze (2) zu ermöglichen.

3. System nach einem der Ansprüche 1 oder 2, **dadurch gekennzeichnet, dass** die Körnung zwischen der Stange (4) und der Anlegefläche (8) ein verbindendes Porennetz (9) definiert.

4. System nach einem der Ansprüche 1 bis 3, **dadurch gekennzeichnet, dass** die Sange (4) eine externe Oberflächenbehandlung aufweist.

5. System nach Anspruch 4, **dadurch gekennzeichnet, dass** die Oberflächenbehandlung ausgeführt wird, durch:
- eine Metallabscheidung,
- und/oder einen Anstrich,
- und/oder einen Lack.

6. System nach einem der Ansprüche 1 bis 5, **dadurch gekennzeichnet, dass** es zwei Hüllen (5) zur Aufnahme von zwei jeweiligen Stangen (4) umfasst, wobei zu bemerken ist, dass:
- die Hüllen Mittel zur Montage umfassen, die dazu bestimmt sind, mit gegenseitigen Mitteln zusammenzuwirken, die oben an der Rückenlehne (3) vorgesehen sind,
- die Stangen aus einer rohrförmigen Metallarmatur (10) hervorgehen, die gebogen ist, um in der Vorderansicht eine allgemeine Form eines umgekehrten U aufzuweisen, wobei jeder der Schenkel des U eine der Stangen definiert, die jeweils in eine der Hüllen gleiten, wobei die Oberseite der Armatur dazu bestimmt ist, mit einem Anlegekissen versehen zu sein, um eine Kopfstütze (2) zu bilden.

7. System nach einem der Ansprüche 1 bis 5, **dadurch gekennzeichnet, dass** es zwei Hüllen (5) zur Aufnahme von zwei jeweiligen Stangen (4) umfasst, wobei zu bemerken ist, dass:
- die Hüllen wie folgt sind:
∘ entweder mit Mitteln zur Montage versehen, die dazu bestimmt sind, mit gegenseitigen Mitteln zusammenzuwirken, die in einem Energieabsorptionsgehäuse (13) aus einem geformten Kunststoffmaterial vorgesehen sind, das dazu bestimmt ist, mit einem Kissen einer Kopfstütze versehen zu sein,
∘ oder in einem Block mit einer Zwischenstruktur geformt, um ein solches Gehäuse zu bilden,
- die Stangen aus einer Metallarmatur (10) einer Rückenlehne (3) hervorgehen.

8. Rückenlehne (3) eines Kraftfahrzeugsitzes, auf der im oberen Teil zwei Hüllen (5) eines Systems nach Anspruch 6 montiert sind.

9. Kopfstütze (2) eines Kraftfahrzeugsitzes, umfassend ein Energieabsorptionsgehäuse (13), wobei das Gehäuse zwei Hüllen (5) eines Systems nach Anspruch 7 einbezieht, wobei die Hüllen wie folgt sind:
- entweder in dem Gehäuse montiert,
- oder in einem Block mit einer Zwischenstruktur geformt, um das Gehäuse zu bilden.

10. Hülle (5) eines Systems (1) nach einem der Ansprüche 1 bis 7, wobei die Hülle aus einem geformten Kunststoffmaterial ist, wobei die Hülle eine Leitung (6) aufweist, deren Innenfläche (7) mindestens eine weitläufige Zone aufweist, die eine Anlegefläche (8) definiert, wobei die Hülle **dadurch gekennzeichnet ist, dass** die Anlegefläche gekörnt ist.

## Claims

1. System (1) for installing a headrest (2) on a backrest (3) of a motor vehicle seat, said system comprising:
- a metal rod (4),
- a sheath (5) made of moulded plastic material for slidingly receiving said rod, said sheath having a conduit (6) the inner face (7) of which has at least one extended zone defining a bearing face (8) that is adjusted by tight contact by positive locking with said rod, in such a way that said rod slides in adjusted contact in said conduit, said system being **characterised in that** said bearing face is grained.

2. System according to claim 1, **characterised in that** it further comprises a device for locking the rod (4) with respect to the sheath (5) according to a plurality of adjustment positions, in such a way as to allow for a height adjustment of the headrest (2).

3. System according to one of claims 1 or 2, **characterised in that** the graining defines between the rod (4) and the bearing face (8) a communicating network of pores (9).

4. System according to any of claims 1 to 3, **characterised in that** the rod (4) has an external surface treatment.

5. System according to claim 4, **characterised in that** the surface treatment is carried out by:
- a metal deposition,
- and/or a paint,
- and/or a varnish.

6. System according to any of claims 1 to 5, **characterised in that** it comprises two sheaths (5) for receiving two respective rods (4), knowing that:
- said sheaths comprise mounting means intended to cooperate with reciprocal means provided at the top of the backrest (3),
- said rods come from a metal tubular frame (10) folded in such a way as to have in a front view a general inverted U shape, each one of the branches of the U defining one of said rods each sliding in one of said sheaths, the top of said frame being intended to be provided with a support cushion for forming a headrest (2).

7. System according to any of claims 1 to 5, **characterised in that** it comprises two sheaths (5) for receiving two respective rods (4), knowing that:
- said sheaths are:
o either provided with mounting means intended to cooperate with reciprocal means provided in an energy absorption case (13) made of moulded plastic material intended to be provided with a headrest cushion,
∘ or integrally moulded with an intermediate structure to form such a case,
- said rods come from a metal frame (10) of a backrest (3) .

8. Backrest (3) of a motor vehicle seat whereon are mounted at the top portion two sheaths (5) of a system according to claim 6.

9. Headrest (2) of a motor vehicle seat comprising an energy absorption case (13), said case integrating two sheaths (5) of a system according to claim 7, said sheaths being:
- either mounted in said case,
- or integrally moulded with an intermediate structure to form said case.

10. Sheath (5) of a system (1) according to any of claims 1 to 7, said sheath being made of moulded plastic material, said sheath having a conduit (6) the inner face (7) of which has at least one extended zone defining a bearing face (8), said sheath being **characterised in that** said bearing face is grained.
